# EUROPEAN PATENT APPLICATION

(11) **EP 2 991 005 A1**
(43) Date of publication of application: **02.03.2016**
(21) Application number: 14195023.8
(22) Date of filing: 26.11.2014
(51) Int. Cl.: G06Q 10/06

(54) **Systems and methods for creating and evaluating experiments**

(30) Priority: 26.08.2014 IN CH41592014
(71) Applicant: Mu Sigma Business Solutions Pvt. Ltd., Bangalore 560066 (IN)
(72) Inventor: Rao, Harshavardhana, 560085 Bangalore (IN); Srinivasan, Naren, 600125 Chennai (IN); Seshadri, Prakash, 560066 Bangalore (IN); Janardhanan, Abhilash, 600031 Chennai (IN)
(74) Representative: Arrowsmith, Peter Michael E.

(57) **Abstract**

A system for creating and evaluating experiments is provided. The system includes a learning repository configured to store learning data and a definer module configured to define a plurality of business objectives and to generate one or more hypotheses based on the plurality of business objectives. The definer module is further configured to design a plurality of experiments associated with the one or more hypotheses. The system also includes a design module configured to determine one or more experiment parameters associated with each of the plurality of experiments based on the one or more hypotheses and to validate each of the plurality of experiments and an execution module configured to execute the plurality of experiments. The system further includes an analysis module configured to analyze the results of the plurality of experiments and to generate output data and a communication network coupled to the learning repository, the definer module, the design module, the execution module and the analysis module. The communication network is configured to facilitate flow of information between the learning repository, the definer module, the design module, the execution module and the analysis module.

## Description

### BACKGROUND

The invention relates generally to systems and methods for creating and evaluating experiments, and more particularly to a system and method for designing experiments to evaluate effectiveness of business strategies.

Strategies are often used in business organizations for decision-making and to set directions for executable actions. The key inputs to the decision making process include intuition and prior experience of people making the decisions.

However, prior experience can sometimes be irrelevant or intuition may turn out to be wrong due to presence of many confounding factors. Business organizations compensate for these shortcomings by going back and re-addressing the decisions. These iterations in decision may delay the development and implementation of the strategy.

Moreover, it is tedious to measure and assess success of the strategies as a result of long delays in implementation, which in turn affects the profitability of the business. Also, it is challenging to translate findings into consumable insights and business strategies. Thus, the lack of a structured and predictable methodology makes it difficult for organizations to consistently formulate effective business strategies.

Therefore, there is a need to implement cost-effective experimentation systems that use efficient analytical techniques to improve the overall accuracy and speed of decision making.

### SUMMARY

Briefly, according to one aspect of the invention, a system for creating and evaluating experiments is provided. The system includes a learning repository configured to store learning data and a definer module configured to define a plurality of business objectives and to generate one or more hypotheses based on the plurality of business objectives. The definer module is further configured to design a plurality of experiments associated with the one or more hypotheses. The system also includes a design module configured to determine one or more experiment parameters associated with each of the plurality of experiments based on the one or more hypotheses and to validate each of the plurality of experiments and an execution module configured to execute the plurality of experiments. The system further includes an analysis module configured to analyze the results of the plurality of experiments and to generate output data and a communication network coupled to the learning repository, the definer module, the design module, the execution module and the analysis module. The communication network is configured to facilitate flow of information between the learning repository, the definer module, the design module, the execution module and the analysis module.

In accordance with another aspect, a computer-implemented method for creating and evaluating experiments is provided. The method includes accessing learning data in a learning repository and defining, by a definer module, a plurality of business objectives and generating one or more hypotheses based on the plurality of business objectives. The method also includes designing, by the definer module, a plurality of experiments associated with the one or more hypotheses and determining, by a design module, one or more experiment parameters associated with each of the plurality of experiments based on the one or more hypotheses. The method further includes executing, by an execution module, the plurality of experiments and analyzing, by an analysis module, results of the plurality of experiments and generating output data.

In accordance with yet another aspect, non-transitory computer readable mediums are described. Some example non-transitory computer readable mediums may include computer-executable instructions stored thereon that are executable by a processor to perform or cause to be performed various methods to create and evaluate experiments in a computer system. Example methods may include request to access learning repository storing learning data to define a plurality of business objectives and to generate one or more hypothesis based on the plurality of business objectives by a definer module. The request may be associated with an instruction executing on a processor of the computer system to design plurality of experiments associated with one or more hypothesis and to determine one or more experiment parameters associated with each of the plurality of experiments based on one or more hypotheses. The plurality of experiments may be executed by the execution module and results of the plurality of experiments may be analyzed, by an analysis module, and output data may be generated.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of one embodiment of a system for creating and evaluating experiments implemented according to aspects of the present technique;
FIG. 2 is a block diagram of one embodiment of a definer module implemented according to aspects of the present technique;
FIG. 3 is a block diagram of one embodiment of a design module implemented according to aspects of the present technique;
FIG. 4 is a block diagram of one embodiment of an execution module implemented according to aspects of the present technique;
FIG. 5 is a block diagram of one embodiment of an analysis module implemented according to aspects of the present technique;
FIG. 6 is an example flow diagram of one method for creating and evaluating experiments implemented according to aspects of the present technique;
FIG. 7 is a screen shot representing example experiments created by the system of FIG. 1 implemented according to aspects of the present technique;
FIG. 8 is a screen shot representing example learning data corresponding to the experiments defined in FIG. 7 implemented according to aspects of the present technique;
FIG. 9 is a screen shot representing example details related to the learning data of FIG. 8 implemented according to aspects of the present technique;
FIG. 10 is a screen shot representing example calendar view for the experiments created by the system of FIG. 1 implemented according to aspects of the present technique;
FIG. 11 is a screen shot representing example Situation-Complication-Question matrix template for the experiments defined in FIG. 7 implemented according to aspects of the present technique;
FIG. 12 is a screen shot representing example factor map template for the experiments defined in FIG. 7 implemented according to aspects of the present technique;
FIG. 13 is a screen shot representing example hypothesis matrix template for the experiments defined in FIG. 7 implemented according to aspects of the present technique;
FIG. 14 is a screen shot representing example experiment parameters for the experiments defined in FIG. 7 implemented according to aspects of the present technique;
FIG. 15 is a screen shot representing example responses for the experiments defined in FIG. 7 implemented according to aspects of the present technique;
FIG. 16 is a screen shot representing example response creation for the experiments defined in FIG. 7 implemented according to aspects of the present technique;
FIG. 17 is a screen shot representing example factors for the experiments defined in FIG. 7 implemented according to aspects of the present technique;
FIG. 18 is a screen shot representing example interactions for the design factors of FIG. 17 implemented according to aspects of the present technique;
FIG. 19 is a screen shot representing example sample size determination for the experiments defined in FIG. 7 implemented according to aspects of the present technique;
FIG. 20 is a screen shot representing example sample assignment for the experiments defined in FIG. 7 implemented according to aspects of the present technique;
FIG. 21 is a screen shot representing example sample list for the experiments defined in FIG. 7 implemented according to aspects of the present technique;
FIG. 22 is a screen shot representing example design validation for the experiments defined in FIG. 7 implemented according to aspects of the present technique;
FIG. 23 is a screen shot representing comparison of example design validation plots for the experiments defined in FIG. 7 implemented according to aspects of the present technique;
FIG. 24 is a block diagram of an example general-purpose computing device used to implement a system for creating and evaluating experiments implemented according to aspects of the present technique; and
FIG. 25 illustrates an example computer program product that can be utilized to implement creation and evaluation of experiments in computer systems.

### DETAILED DESCRIPTION

The present invention provides systems and methods for creating and evaluating experiments. The systems and methods for creating and evaluating experiments are described with example embodiments and drawings. References in the specification to "one embodiment", "an embodiment", "an exemplary embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

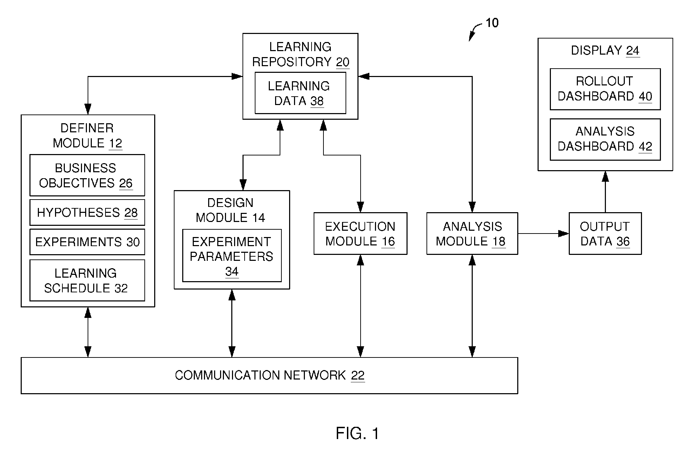

FIG. 1 is a block diagram of a system 10 for creating and evaluating experiments in accordance with the present technique. The system 10 includes a definer module 12, a design module 14, an execution module 16, an analysis module 18 and a learning repository 20. The system 10 further includes a communication network 22 and a display 24. Each component is described in further details below.

The definer module 12 is coupled to the learning repository 20 and is configured to define a plurality of business objectives 26. The definer module 12 is further configured to generate one or more hypotheses 28 based on the plurality of business objectives 26. Examples of the plurality of business objectives 26 include causes of revenue leakage in an organization, customer buying patterns, impact of price rise on sales, identifying sales drivers and the like. The definer module 12 is further configured to design a plurality of experiments 30 associated with the one or more hypotheses 28.

In one embodiment, the plurality of business objectives 26 are defined by a user based on historical data associated with one or more executed experiments. As used herein, the term "user" may refer to both natural people and other entities that operate as a "user". Examples include corporations, organizations, enterprises, teams, or other group of people. The definer module 12 is further configured to determine a learning schedule 32 having a plurality of timeslots for the plurality of experiments.

The design module 14 is coupled to the learning repository 20 and is configured to determine one or more experiment parameters 34 associated with each of the plurality of experiments 30 based on the one or more hypotheses 28 and to validate each of the plurality of experiments 30. Examples of the one or more experiment parameters 34 associated with each of the plurality of experiments 30 may include, but are not limited to, a type of experiment, a number of factors associated with the experiments, sample size of the factors, cost of conducting the experiments, or combinations thereof. Examples of the type of experiment may include, but are not limited to, a pre-selected experiment, a randomized experiment, a design factorial experiment, a fractional factorial experiment, a central composite experiment, a Plackett-Burman experiment, or combinations thereof.

In one example embodiment, the design module 14 is further configured to estimate a metric to determine the success of experiments 30 and to validate the respective hypotheses 28. In another example embodiment, the design module 14 is further configured to prioritize the plurality of experiments 30 and/or combine the one or more hypotheses 28 into a single experiment based on the plurality of business objectives 26.

The execution module 16 is coupled to the learning repository 20 and is configured to execute the plurality of experiments 30. In this embodiment, the execution module 16 is configured to execute the plurality of experiments 30 in accordance with the learning schedule 32 determined by the definer module 12. The execution module 16 is further configured to track the execution of the plurality of experiments 30 and to modify one or more experiment parameters 34 based on results of the plurality of experiments 30. In one embodiment, the plurality of experiments 30 can be terminated based on initial data. The execution module 16 is further configured to perform a quality check for the plurality of experiments 30.

The analysis module 18 is coupled to the learning repository 20 and is configured to analyze the results of the plurality of experiments 30 and to generate output data 36. Examples of the output data 36 may include, but are not limited to, one or more dashboards representing the results of the experiments, one or more business strategies based on the results of the experiments, or combinations thereof. In one embodiment, the analysis module 18 further includes an optimizer and a simulator (not shown) to generate dashboards and rollout scenarios for the user.

In this embodiment, each of the definer module 12, the design module 14, the execution module 16 and the analysis module 18 is further configured to receive inputs from at least one of the other modules for creating and evaluating the experiments.

The learning repository 20 is coupled to the definer module 12, the design module 14, the execution module 16 and the analysis module 18 and is configured to store learning data 38. In one embodiment, the learning data 38 includes historical data associated with one or more executed experiments. Examples of learning data 38 may include data associated with an organization/business such as customer data, client data, business objectives data, hypotheses and component questions data, analysis data, budget data and the like. The definer module 12, the design module 14, the execution module 16 and the analysis module 18 utilize learning data 38 from the learning repository 20 to perform several operations like defining the plurality of experiments 30, determining one or more experiment parameters 34 associated with each of the plurality of experiments 30, executing the plurality of experiments 30 and analyzing the results of the plurality of experiments 30.

The communication network 22 such as an interconnection network 22 is coupled to the learning repository 20, the definer module 12, the design module 14, the execution module 16 and the analysis module 18 and is configured to facilitate flow of information between the learning repository 20, the definer module 12, the design module 14, the execution module 16 and the analysis module 18.

The display 24 is coupled to the analysis module 18 and is configured to communicate output data 36 to the user of the system 10. In this embodiment, the display 24 communicates the results of the plurality of experiments 30 in a variety of formats such as a rollout dashboard 40 and an analysis dashboard 42. The system for creating and evaluating experiments 10 explained above is further configured to publish the designed plurality of experiments 30 for review of the user. The manner in which the definer module 12, the design module 14, the execution module 16 and the analysis module 18 operate is described in further detail below.

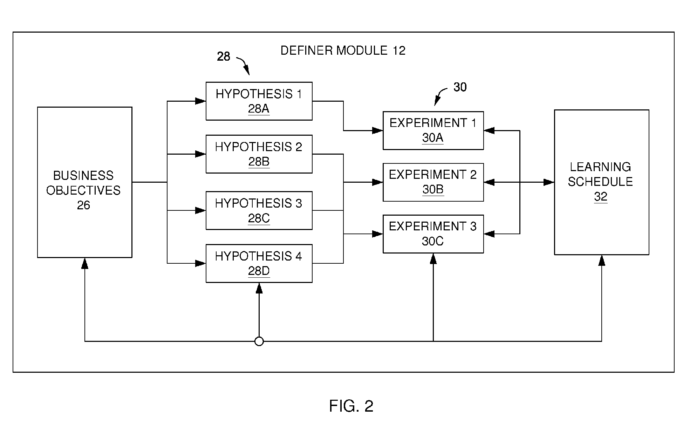

FIG. 2 is a block diagram of an example of the definer module 12 of the system of FIG. 1. As described earlier, the definer module 12 is configured to define a plurality of business objectives 26 and to generate one or more hypotheses 28 based on the plurality of business objectives 26. In one example embodiment, the definer module 12 generates one or more hypotheses 28 by using a data collection framework (not shown) designed to collect the learning data 38 in a structured fashion. One example of the data collection framework is described in India patent application number 160/CHE/2013 titled "Data Management System and Tool" filed on the 7^{th} Jan 2013 and is incorporated herein. The data collection framework ensures appropriate emphasis on sufficient and effective collection of learning data 38 leading to accurate representation and scoping of the plurality of business objectives 26.

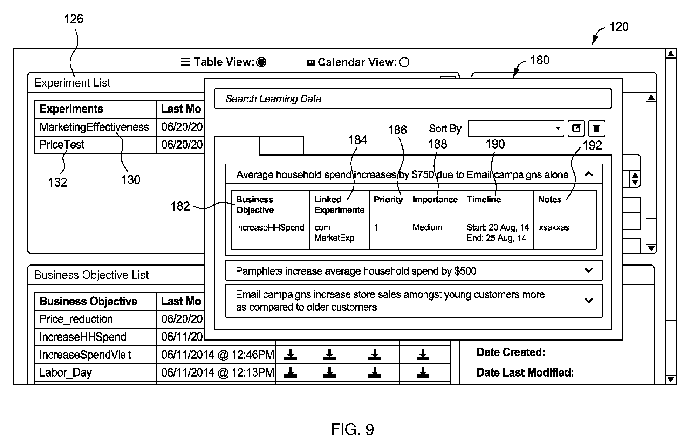

In one example, the data collection framework includes a Situation-Complication-Question (SCQ) interface, a factor map interface and a hypothesis interface. These interfaces are used by the data collection framework to populate their respective templates (described below in FIG. 9, 10, 11) to collate relevant learning data 38 for the plurality of business objectives 26 defined by the user. The SCQ interface populates a corresponding SCQ template based on the plurality of business objectives 26 received from the user to represent a current state, a desired solution and gaps between the current state and the desired solution related to the plurality of business objectives 26. The completed SCQ template is then used by the factor map interface to complete the factor map template. The factor map template includes the various factors that directly or indirectly contribute to the plurality of business objectives 26 defined by the user. In certain embodiments, the user can alter the factor map by adding or deleting the influencing factors depending upon the nature of the plurality of business objectives 26.

The hypothesis interface determines a hypothesis matrix for the specified plurality of business objectives 26 and populates the corresponding hypothesis template by generating one or more hypotheses 28. In the illustrated embodiment, the one or more hypotheses 28 generated for the plurality of business objectives 26 include hypothesis 1-4 represented by reference numerals 28-A, 28-B, 28-C and 28-D respectively. The definer module 12 is configured to design the plurality of experiments 30 associated with the one or more hypotheses 28 using the hypothesis template. For example, the plurality of experiments 30 designed by the definer module 12 include experiment 1-3 represented by reference numerals 30-A, 30-B and 30-C respectively. Any number of hypotheses and experiments may be contemplated. The definer module 12 is further configured to determine the learning schedule 32 having a plurality of timeslots for the plurality of experiments 30. The manner in which the design module 14 operates is described in further details below. In some examples, the learning schedule 32 can be integrated with a working calendar of the user of the system 10.

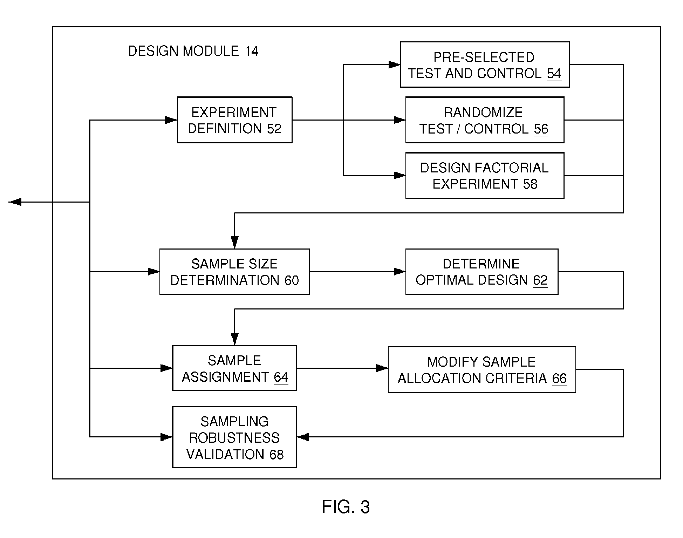

FIG. 3 is a block diagram of one embodiment of the design module 14 implemented according to aspects of the present technique. In this embodiment, the plurality of experiments 30 are defined (represented by reference numeral 52) based on the inputs provided by the user of the system 10. The design module 14 enables the user to identify a suitable design for the experiments from pre-defined types of experiments. In one example embodiment, the type of experiment includes a pre-selected test and control experiment (represented by reference numeral 54), a randomized test and control experiment (represented by reference numeral 56) and a design factorial experiment (represented by reference numeral 58), a central composite experiment, a Plackett- Burman experiment, or combinations thereof.

As described earlier, the design module 14 is configured to determine one or more experiment parameters 34 associated with each of the plurality of experiments 30 based on the one or more hypotheses 28. For example, the design module 14 may be configured to determine a sample size 60 for the experiments. Further, optimal designs 62 may be determined for the plurality of experiments 30. As represented by reference numeral 64, the sample assignment is done for the experiments and sample allocation criteria may be modified (represented by reference numeral 66). The design module 14 is further configured to perform sampling robustness validation for each of the plurality of experiments 30 (as represented by reference numeral 68) to accomplish the learning schedule 32.

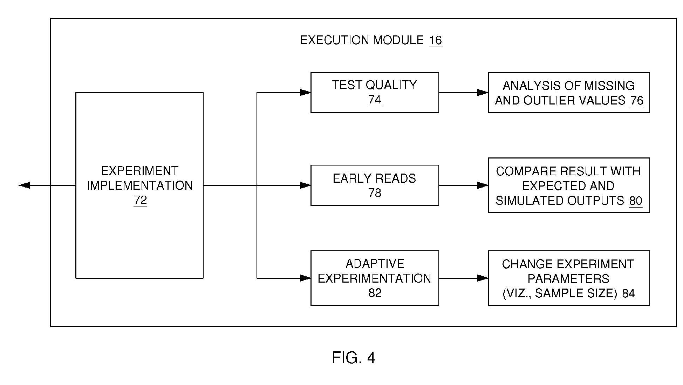

FIG. 4 is a block diagram of one embodiment of the execution module 16 implemented according to aspects of the present technique. The execution module 16 facilitates implementation of the plurality of experiments (represented by reference numeral 72) in accordance with the learning schedule 32 determined by the definer module 12. The execution module 16 is further configured to perform quality test (represented by reference numeral 74) for the plurality of experiments 30. In the illustrated embodiment, the execution module 16 performs quality test by analyzing missing and outlier values of the results (represented by reference numeral 76).

The execution module 16 is further configured to identify early reads 78 for the plurality of experiments 30. In the illustrated embodiment, the execution module 16 is configured to identify early reads by comparing the results for one or more executed experiments with expected and simulated outputs (represented by reference numeral 80).

The execution module 16 is further configured to generate adaptive experiment designs 82 for the plurality of experiments 30. In the illustrated embodiment, the execution module 16 generates adaptive experiment designs by modifying one or more experiment parameters 34 such as sample size during the execution based on early reads (represented by reference numeral 84).

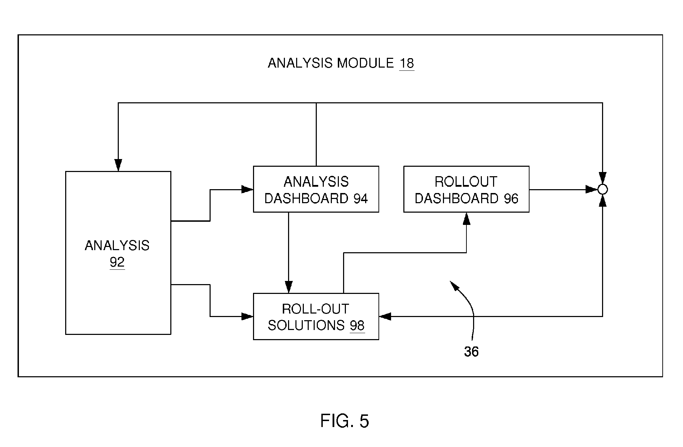

FIG. 5 is a block diagram of one embodiment of the analysis module 18 implemented according to aspects of the present technique. As described earlier, the analysis module 18 is configured to perform analysis (generally represented by reference numeral 92) of the results of the plurality of experiments 30 and to generate output data 36. The analysis module 18 includes a display 24 to communicate output data 36 to the user of the system 10.

In one embodiment, the output data 36 includes one or more dashboards representing the results of the experiments, one or more business strategies based on the results of the experiments, or combinations thereof. In one embodiment, the analysis module 18 includes an analysis dashboard 94 and a rollout dashboard 96 to communicate the output data 36 to the user of the system 10. Other formats of representing the output data 36 may be envisaged. The analysis module 18 further includes an optimizer and a simulator (not shown) to generate rollout solutions 98 for the user. The manner in which the plurality of experiments 30 are created and evaluated is described in further detail below.

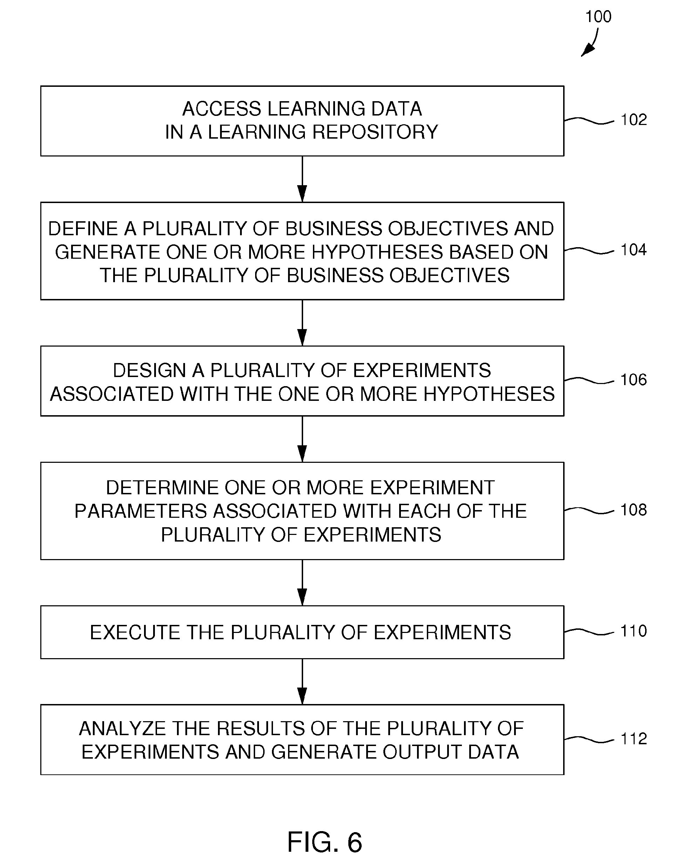

FIG. 6 is an example flow diagram 100 of one method for creating and evaluating experiments implemented according to aspects of the present technique. Each step of the process is described below.

At block 102, learning data 38 in a learning repository 20 is accessed. In one embodiment, the learning data 38 includes historical data associated with one or more executed experiments. Examples of learning data 38 may include customer and client data, business objectives data, hypotheses and component questions data, analysis data, external data, budget data and the like.

At block 104, a plurality of business objectives 26 are defined by a definer module 12 and one or more hypotheses 28 are generated based on the plurality of business objectives 26. Examples of the plurality of business objectives 26 include causes of revenue leakage, customer buying pattern, impact of price rise on sales, identifying sales drivers and the like. In one embodiment, the plurality of business objectives 26 are defined by the user based on the historical data associated with one or more executed experiments.

At block 106, a plurality of experiments 30 associated with the one or more hypotheses 28 are designed by the definer module 12. Examples of the type of experiment may include, but are not limited to, a pre-selected experiment, a randomized experiment, a design factorial experiment, a fractional factorial experiment, a central composite experiment, a Plackett-Burman experiment, or combinations thereof.

At block 108, one or more experiment parameters 34 associated with each of the plurality of experiments 30 are determined by a design module 14 based on the one or more hypotheses 28. Examples of the one or more experiment parameters 34 associated with each of the plurality of experiments 30 may include, but are not limited to, a type of experiment, a number of factors associated with the experiments, sample size, cost of conducting the experiments, or combinations thereof. Each of the plurality of experiments 30 are further validated by the design module 14.

At block 110, the plurality of experiments 30 are executed by an execution module 16. In one embodiment, the plurality of experiments 30 are executed in accordance with the learning schedule 32 determined by the definer module 12.

At block 112, results of the plurality of experiments 30 are analyzed by an analysis module 18 and output data 36 is generated. In one embodiment, one or more business strategies are determined based on the results of the plurality of experiments 30.

In one embodiment, at least one of defining the business objectives, designing the experiments, executing the experiments, analyzing the results of the experiments is performed using inputs from the learning data 38 stored in the learning repository 20.

The above described system and method for creating and evaluating experiments 10 implements several user interfaces to enable the user to create and evaluate plurality of experiments. Some of the relevant interfaces are described in further detail below.

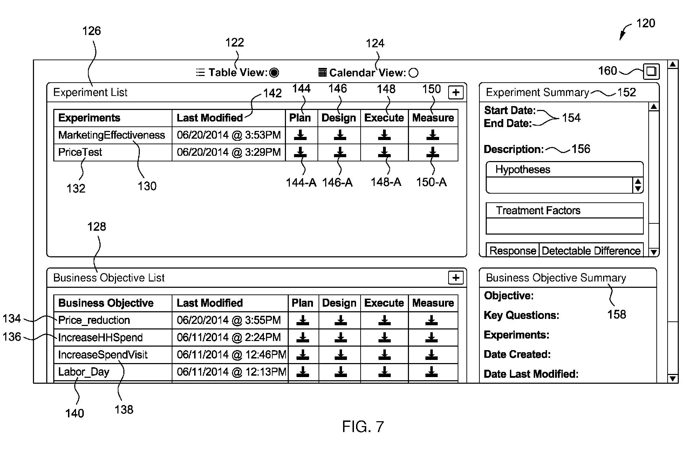

FIG. 7 is a screen 120 representing example experiments created by the system 10 of FIG. 1. The screen 120 provides an option to view a list of experiments and business objectives present in the learning repository using a table view (radio button 122) or a calendar view (radio button 124). In the illustrated embodiment, a list of experiments (cell 126) and business objectives (cell 128) are displayed in a tabular form upon selection of the "Table View" option (radio button 122). Examples of the experiments created by the system of FIG. 1 include marketing effectiveness (cell 130), price test (cell 132) and the like. Similarly, examples of the business objectives include objectives associated with sale of one or more products such as Price_reduction (cell 134), IncreaseHHSpend (indicative of spend by customers of a store) (cell 136), IncreaseSpendVisit (indicative of number of visits by customers of a store) (cell 138), Labor_Day (indicative of sales/revenues on particular days of the year) (cell 140) and the like.

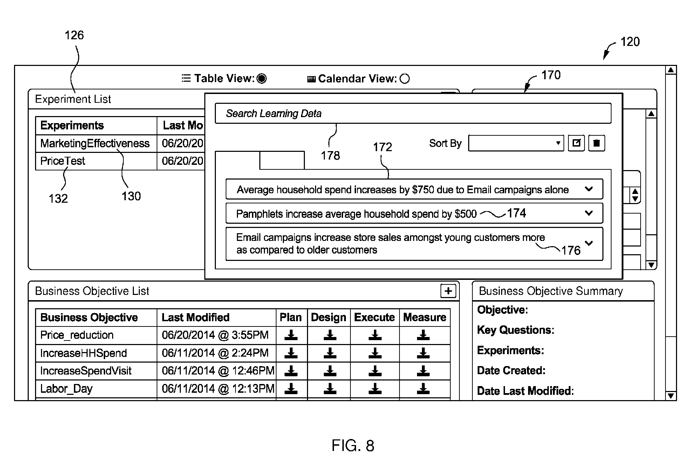

The table view (radio button 122) also includes field pertaining to last modification date and time (cell 142) for each experiment and business objective. Further, the screen 120 denotes one or more phases related to each experiment and business objective like plan (cell 144), design (cell 146), execute (cell 148) and measure (cell 150). In addition, one or more states for each experiment and business objective in each phase are indicated using color coded scheme (shown by reference numerals 144-A, 146-A, 148-A, 150-A) and acts as a direct link to that particular phase of the experiment. The color indicates the status of the phases of the experiment, e.g., whether the phase is not started (e.g., represented by color red), partially done (e.g., represented by color orange) or completed (e.g., represented by color green). The screen 120 also includes an experiment summary pane 152 providing details like start date and end date of the experiment (cell 154), description (e.g. hypothesis, treatment factors, response) (cell 156) related to each experiment. Further, a business objective summary pane 158 illustrating summary of the business objective like objectives, key questions, experiments, date created, last modified date is also provided in the screen 120. On clicking the tab 160 provided in the screen 120 learning data corresponding to the experiments can be viewed as described below in FIG. 8.

FIG. 8 is a screen 170 representing example learning data corresponding to the experiments defined in FIG. 7. In this example, the learning data includes "Average household spend increases by 750$ due to e-mail campaigns alone" (cell 172), "Pamphlets increase average household spend by 500$" (cell 174), "e-mail campaigns increase store sales amongst young customers more as compared to older customers" (cell 176) and the like. Such learning data may correspond to results of previous executed experiments. The learning data can also be searched through the learning repository by specifying keywords in the search field 178 provided in the screen 170. The details related to a searched learning data can be obtained by clicking on it. For example, on clicking the learning data "Average household spend increases by 750$ due to e-mail campaigns alone" (cell 172), the screen 170 transitions to another pop-up screen 180 as described in FIG. 9. The various details related to the learning data provided in the pop-up screen 180 include business objective (cell 182), linked experiments (cell 184), priority (cell 186), importance (cell 188), timeline (cell 190) and notes (cell 192).

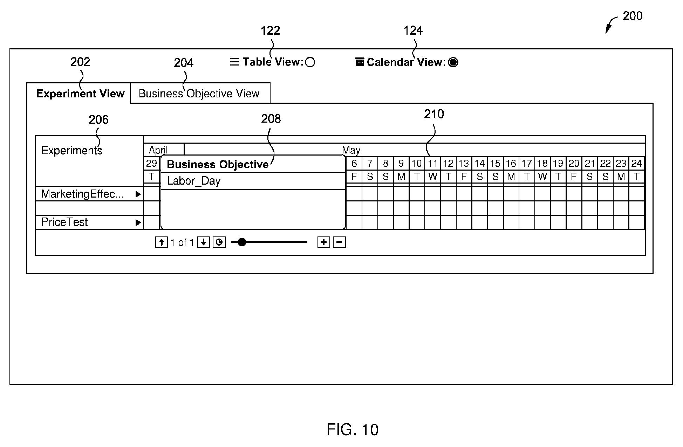

FIG. 10 is a screen 200 representing an example calendar view of the experiments created by the system 10 of FIG. 1. On selecting the "Calendar View" option (radio button 124) in the screen 120 the screen transitions to the calendar view screen 200. The screen 200 includes tabs for "Experiment View" 202 and "Business Objective View" 204 that facilitate the user to view a plurality of experiments (cell 206) and business objectives (not shown). In this example, on selection of an experiment such as marketing effectiveness experiment, the corresponding business objective (e.g. Labor_Day) is displayed using a pop-up window 208. The screen 200 also displays a learning schedule (cell 210) for each experiment (e.g., the marketing effectiveness experiment) in a calendar format with plurality of time slots. Thus, the experiments as well as the business objectives associated with the experiments may be viewed in different formats using this example screen 200.

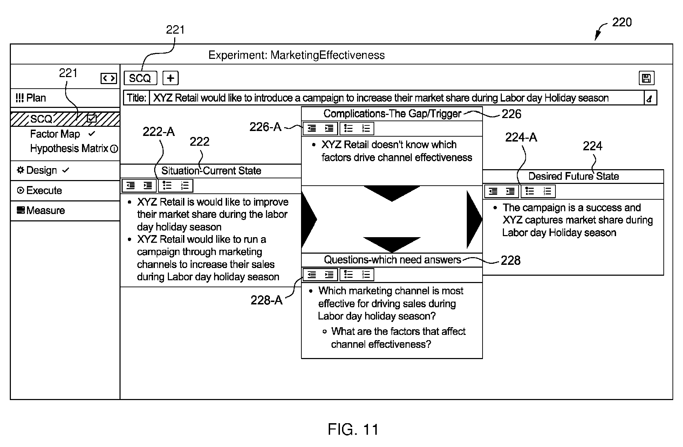

FIG. 11 is a screen 220 representing an example Situation-Complication-Question (SCQ) matrix template 221 for the experiments defined in FIG. 7 implemented according to aspects of the present technique. In the illustrated embodiment, a business objective is represented using a current state (cell 222), a desired solution or future desired state (cell 224) and gaps (cell 226) between the current state and the desired solution of the business objective. The screen 220 enables the user to enter a plurality of questions (cell 228) related to the gaps between the current state and the desired state of the business objective that are required to be answered to achieve the desired state.

In this exemplary embodiment, the screen 220 shows the details for an experiment to introduce a campaign to increase market share during labor day holiday season. The cell 222 includes known facts related to the situation or current state such as user's intention to run the campaign through marketing channels. Such known facts quantify the current state of the business objective and are keyed in using the input field 222-A.

Further, the cell 226 includes the details of the gaps/complication for the specified business objective. In the present example, the complication for the business objective is lack of knowledge related to factors driving channel effectiveness. These facts are keyed in using the input field 226-A. The facts related to the future desired state are listed in cell 224 using the input field 224-A. For example, in the current experiment, it is expected that the user captures market share during labor day season.

Moreover, the questions (cell 228) related to the gaps keyed in using input field 228-A. In this example, the cell 228 includes questions like what are the factors that affect channel effectiveness. As will be appreciated by one skilled in the art, a variety of other questions may be formulated in the problem definition phase.

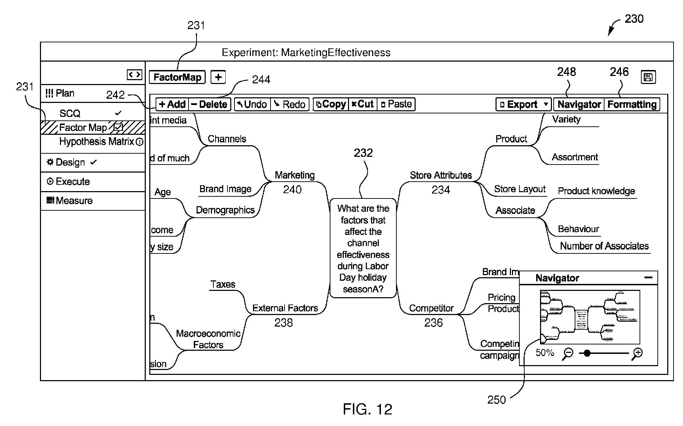

FIG. 12 is a screen 230 representing example factor map template 231 for the experiments defined in FIG. 7 implemented according to aspects of the present technique. In the present example, the screen 230 includes a plurality of factors affecting the marketing effectiveness experiment. These factors may be identified by the user of the system. In the present example, the channel effectiveness factor 232 identified by the user is further categorized into factor categories like store attributes 234, competitor 236, external factors 238 and marketing 240. Moreover, the store attribute factor category 234 includes various sub-factors like store layout, product, associate and so forth. An exhaustive list of factors may be created by the user. Such list of factors may be updated on a regular or a periodic basis using the tabs "Add" (tab 242) and "Delete" (tab 244) provided in the screen 230. Moreover, formatting (tab 246) options are also provided in the screen 230 to facilitate auto formatting and proper visualization of the factor map. Moreover, by using a navigator action (tab 248), a user can access a sub-navigation window 250 that allows easy navigation including zoom-in and zoom-out features.

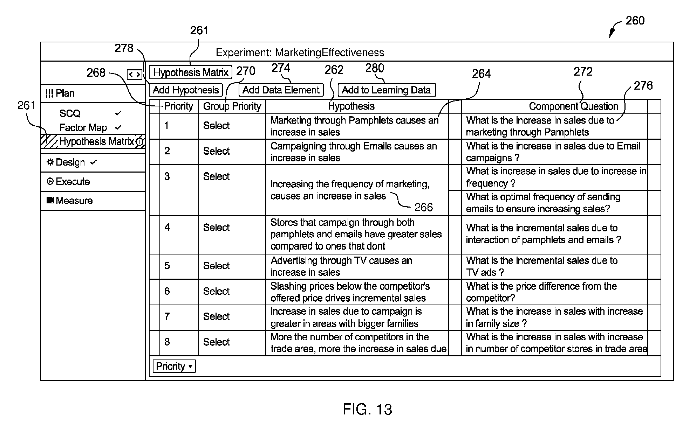

FIG. 13 is a screen 260 with an example hypothesis matrix template 261 for the experiments defined in FIG. 7 implemented according to aspects of the present technique. The hypothesis matrix template 261 includes one or more hypotheses based on the business objectives. Referring back to the previous example, here the hypothesis screen 260 includes one or more hypotheses (cell 262) related to the marketing effectiveness experiment. Examples of the one or more hypotheses may include "marketing through pamphlets causes an increase in sales" (cell 264), "increasing the frequency of marketing causes increase in sales" (cell 266), among others. In this exemplary embodiment, the screen 260 may include an additional cell 268 for assigning priorities either to each hypothesis individually and/or to a group of hypotheses (cell 270). Moreover, one or more associated component questions (cell 272) are formulated corresponding to each hypothesis and data elements associated with the component questions are identified. The data elements can be added by the user through tab 274. Example component questions corresponding to the example hypotheses include "What is the increase in sales due to marketing through pamphlets?" (cell 276) and the like. Further, hypotheses can be added to the hypothesis matrix template using "Add Hypothesis" tab 278. The user can also select and add the hypothesis to the learning data available in the learning repository through "Add to Learning Data" tab 280.

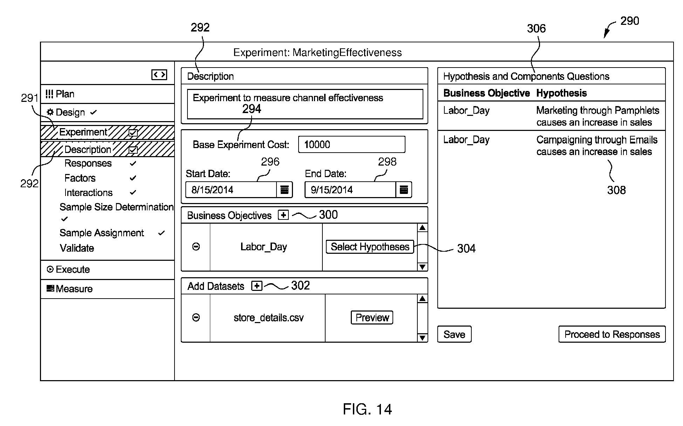

FIG. 14 is a screen 290 representing example experiment parameters for the experiments defined in FIG. 7 implemented according to aspects of the present technique. The screen 290 includes a description field 292 for the user to describe an experiment 291. In addition, one or more experiment parameters like base experiment cost (cell 294), start date (cell 296) and end date (cell 298) can be specified. Further, corresponding business objectives (cell 300) and datasets (cell 302) can be added or deleted. The screen 290 also enables the user to select one or more hypotheses using "Select Hypothesis" tab 304 for each of the business objective. The hypotheses and component questions related to the experiment are displayed using a pane 306. For the present example of marketing effectiveness experiment, Labor_Day and store_details are added as a business objective and as a data set respectively. The corresponding hypotheses and component questions like "Campaigning through Emails causes an increase in sales" is displayed using the pane 308.

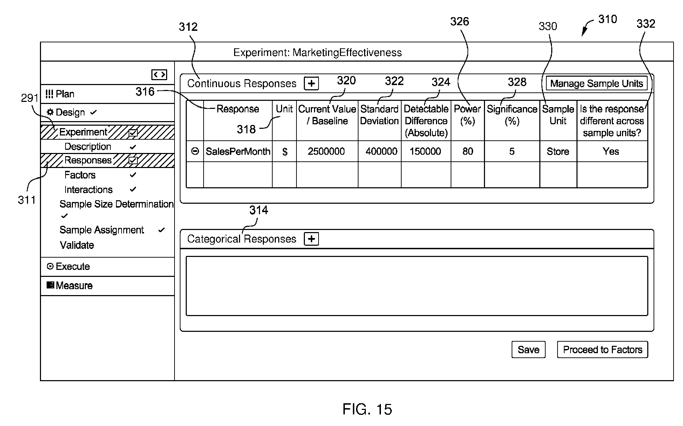

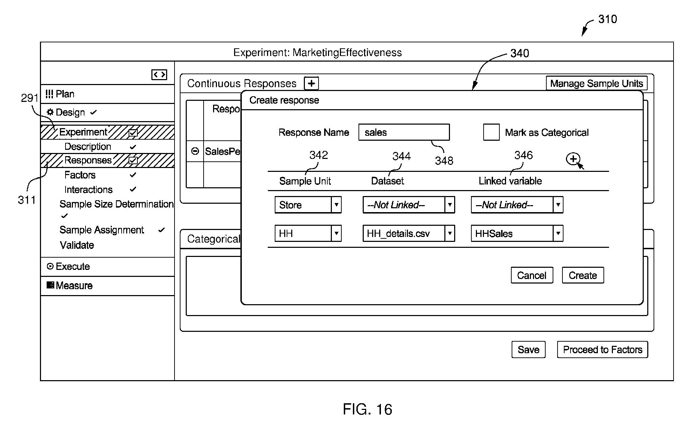

FIG. 15 is a screen 310 representing example responses 311 for the experiments defined in FIG. 7 implemented according to aspects of the present technique. The screen 310 displays continuous responses (cell 312) and categorical responses (cell 314) for the experiments 291. In the illustrated embodiment, a continuous response for the marketing effectiveness experiment is displayed in a tabular form. The continuous responses 312 includes one or more responses (cell 316) (e.g. SalesPerMonth) and values for corresponding response parameters like unit (cell 318), current value/baseline (cell 320), standard deviation (cell 322), detectable difference (cell 324), power (cell 326), significance (cell 328), sample unit (cell 330). The continuous responses 312 further include a cell (cell 332) to indicate if the response differs across sample units. Similarly, the categorical responses 314 for all of the above mentioned response parameters can be obtained. Further, on clicking the responses tab 311, a pop-up window 340 appears in the screen 310 allowing the user to create a new response as shown in FIG. 16. The various details related to the response can be specified in the pop-up window 340 like sample unit (cell 342), dataset (cell 344) and linked variable (cell 346) and response name (cell 348).

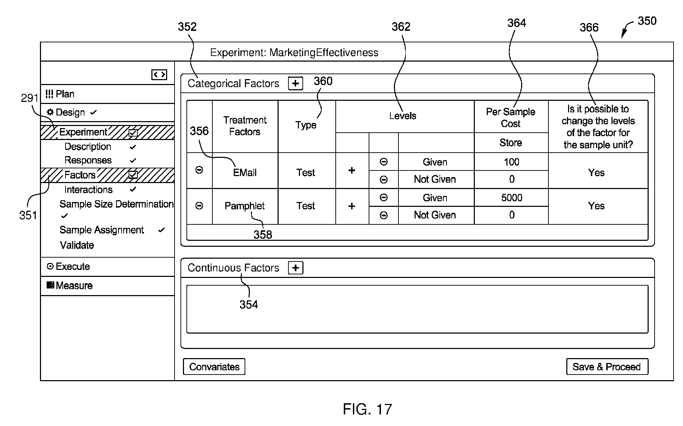

FIG. 17 is a screen 350 with example factors 351 for the experiments defined in FIG. 7 implemented according to aspects of the present technique. The screen 350 displays categorical factors (cell 352) and continuous factors (cell 354) related to the experiments. Typically, the categorical factors (cell 352) include factors that can take one of a limited, and usually fixed, number of possible values whereas the continuous factors (cell 354) includes factors with values that can change on a continuous basis. In the illustrated embodiment, examples of the categorical factors (cell 352) include e-mails (cell 356), pamphlets (cell 358) and the like. A variety of other parameters may be envisaged. Further, one or more hypotheses from a list of all the available hypotheses can be linked and/or unlinked with each factor by clicking on the business objective associated with that factor. The details related to the categorical factors are also specified in a tabular form including type of factor (cell 360), levels (cell 362), per sample cost (cell 364). The screen 350 further provides an option to the user to specify whether it is possible to change the levels of the factors for the sample unit (cell 366).

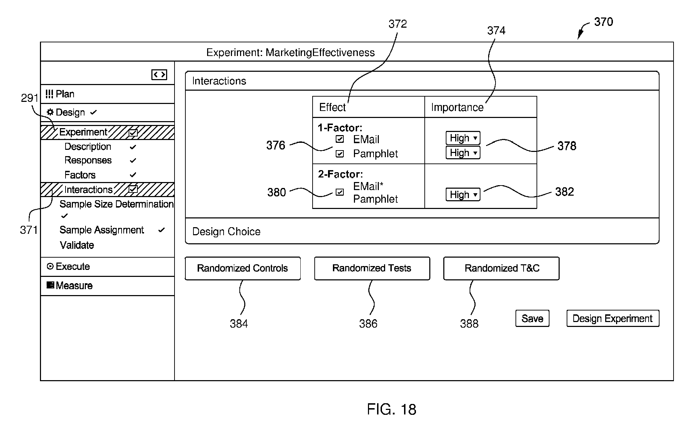

FIG. 18 is a screen 370 illustrating example interactions 371 for the factors 351 of FIG. 17 implemented according to aspects of the present technique. In the illustrated embodiment, the interactions 371 related to the plurality of factors are represented using effect (cell 372) and importance (cell 374) for each of the factors. The importance of the factors can be assigned individually or in a combined manner. For the present example, the importance of factors e-mail and pamphlet (cell 376) is assigned individually (cell 378). Furthermore, the effects of the factors are combined (cell 380) to assign the importance (cell 382). The interactions screen 370 provides multiple design choices to the user for selecting the type of experiments such as randomized controls (tab 384), randomized tests (tab 386) and randomized test and control (tab 388). Other design options may be envisaged.

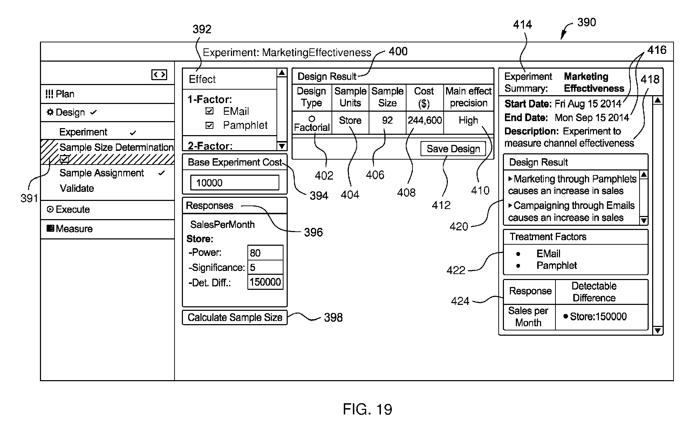

FIG. 19 is a screen shot 390 illustrating details of determining example sample size 391 for the experiments defined in FIG. 7 implemented according to aspects of the present technique. Here, the sample size is determined based on a variety of parameters such as effect of the plurality of factors (cell 392), base experiment cost (cell 394) and responses (cell 396). The sample size for the experiments may be estimated using the "Calculate Sample Size" tab 398. The estimated sample size may be displayed using "Design Result" pane 400. The one or more design results are viewed in a tabular form indicating various result parameters like design type (cell 402), sample units (cell 404), sample size (cell 406), cost (cell 408) and main effect precision (cell 410).

The design results can further be used to find the effect of the factors in influencing the responses. The user can select a suitable design based on the cost and sample size criteria and can also saves the selected design for subsequent steps. The design result can be saved using "Save Design" tab 412. Further, the "Experiment Summary" pane 414 provides a summary of the designed experiment highlighting key attributes like start date and end date (cell 416), description (cell 418), design results (cell 420), treatment factors (cell 422) and responses (cell 424).

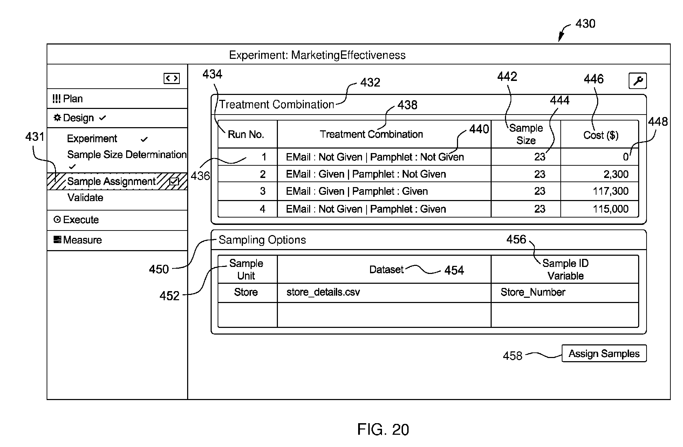

FIG. 20 is a screen 430 illustrating details of an example sample assignment 431 for the experiments defined in FIG. 7 implemented according to aspects of the present technique. The design results saved by a user include multiple treatment combination of the factors 351 that are displayed using screen 430. As used herein, the treatment combinations of the factors include combinations of the factors that can be assigned to an experiment. For the present example, a treatment combination pane 432 provides details about a treatment the user may use for the stores and assigns particular number of stores to different treatment runs (cell 434) using the selected treatment combinations of the factors. For example, for treatment run 1 (represented by cell 436) the selected treatment combination of the factors (cell 438) is "Email: Not Given I Pamphlet: Not Given" (cell 440) with a sample size (cell 442) of about 23 stores (cell 444), and a corresponding cost (cell 446) of about $0 (cell 448). The sample assignment is achieved using the "Sampling Options" pane 450 that includes a list of stores (cell 452) available through a dataset (cell 454) (e.g. store_details) with a column to hold an identifier for each store as sample ID variable (456), (e.g. Store_Number). Further, by using the "Assign Samples" tab 458 corresponding instructions are executed that automatically assign particular stores to particular run numbers/ treatment combinations without overlapping of stores for each of the treatment runs.

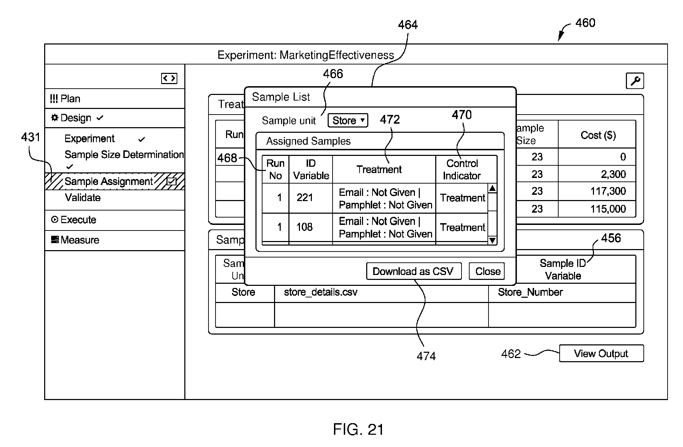

FIG. 21 is a screen 460 representing with details of an example sample list for the experiments defined in FIG. 7 implemented according to aspects of the present technique. As described before, the user can assign the samples using "Assign Samples" tab 458 in the screen 430. Once the sample assignment is completed, the user can view the output using the "View Output" tab 462. In this example, a pop-up window 464 is displayed with a list of samples (Stores) (cell 466) that have been assigned to each treatment run (cell 468) and are identified by the sample ID variable (456), (e.g. Store_Number). Moreover, a control indicator (cell 470) included in the pop-up window 464 can be utilized for test and control designs (e.g. designs with only one factor and 2 levels) to indicate test and control runs. For the present example, the selected experiment is a multivariate experiment (including multiple factors) and hence each run is just a treatment (cell 472). Further, an option of downloading the sample list (cell 466) as a comma-separated values (CSV) file is provided to the user through "Download as CSV" tab 474 which can be used by the user to carry out the experiments physically.

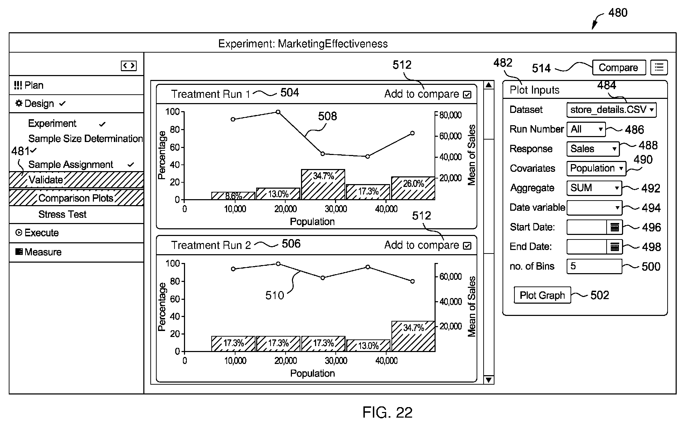

FIG. 22 is a screen 480 with details of example design validation 481 for the experiments defined in FIG. 7 implemented according to aspects of the present technique. In operation, once the sample assignment is completed, the user can view varying responses across different covariates (factors influencing the response) for each treatment run using screen 480 to understand the similarity between the factors. The user can select plot inputs using pane 482 including a dataset (cell 484) that contains the data, run number (cell 486) indicating a number of runs to compare, response variables (cell 488) (e.g. Sales), covariates (cell 490) (e.g. population) and aggregation function (cell 492) (e.g. mean). In addition, date variable (cell 494), start date (cell 496), end date (cell 498) and number of bins (cell 500) can also be specified. Moreover, the user can use a "Plot Graph" tab 502 to view plots for each run (e.g., plot 504 for treatment run 1 and plot 506 for treatment run 2). Each plot can include a histogram of the covariate illustrating the distribution of population among the samples assigned to that particular run. Further, each plot indicates an aggregated value of the response for each bin (shown by reference numeral 508 and 510), for example, the mean of sales for each store within that particular interval of population. Moreover, the user can utilize "Add to Compare" checkbox 512 by selecting plots to compare and clicking the "Compare" tab 514 the screen 480 transitions to a pop-up screen as described below.

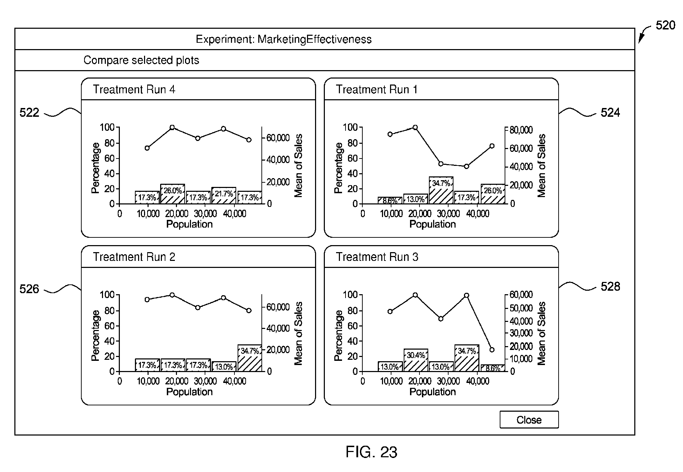

FIG. 23 is a screen 520 illustrating comparison of example design validation plots for the experiments defined in FIG. 7 implemented according to aspects of the present technique. The design validation plots plotted using the screen 480 are viewed side by side for comparison on invoking the "Compare" tab 514. In the illustrated embodiment, the plots for treatment runs 4, 1, 2, 3 (shown by reference numerals 522, 524, 526, 528) can be viewed side by side and compared by the user.

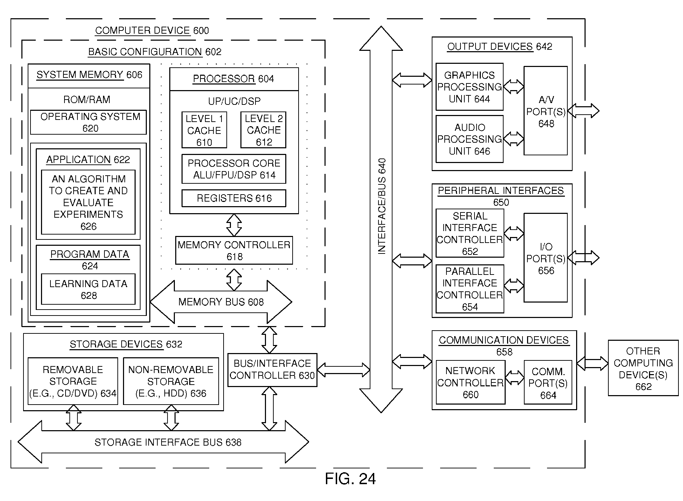

FIG. 24 is a block diagram 600 of an example general-purpose computing device used to implement a system for creating and evaluating experiments implemented according to aspects of the present technique. In a very basic configuration 602, computing system 600 typically includes one or more processors 604 and a system memory 606. A memory bus 608 may be used for communicating between processor 604 and system memory 606.

Depending on the desired configuration, processor 604 may be of any type including but not limited to a microprocessor (µP), a microcontroller (µC), a digital signal processor (DSP), or any combination thereof. Processor 604 may include one or more levels of caching, such as a level one cache 610 and a level two cache 612, a processor core 614, and registers 616. An example processor core 614 may include an arithmetic logic unit (ALU), a floating point unit (FPU), a digital signal processing core (DSP Core), or any combination thereof. An example memory controller 618 may also be used with processor 604, or in some implementations memory controller 618 may be an internal part of processor 604.

Depending on the desired configuration, system memory 606 may be of any (such as ROM, flash memory, etc.) or any combination thereof. System memory 606 may include an operating system 620, an application 622 comprising an algorithm to create and evaluate experiments 626 and a program data 624 comprising learning data 628.

An algorithm to create and evaluate experiments 626 is configured to define the plurality of experiments, determine one or more experiment parameters associated with each of the plurality of experiments, execute the plurality of experiments and analyze the results of the plurality of experiments by utilizing the learning data 628 stored in the program data 624. This described basic configuration 602 is illustrated in FIG. 24 by those components within the inner dashed line.

Computing system 600 may have additional features or functionality, and additional interfaces to facilitate communications between basic configuration 602 and any required devices and interfaces. For example, a bus/interface controller 630 may be used to facilitate communications between basic configuration 602 and one or more data storage devices 632 via a storage interface bus 638. Data storage devices 632 may be removable storage devices 634, non-removable storage devices 636, or a combination thereof.

Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media may include volatile and nonvolatile, removable and non-removable media implemented in any method or technology for storage of information, such as computer readable instructions, data structures, program modules, or other data.

System memory 606, removable storage devices 634 and non-removable storage devices 636 are examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by computing system 600. Any such computer storage media may be part of computing system 600.

Computing system 600 may also include an interface bus 640 for facilitating communication from various interface devices (e.g., output devices 642, peripheral interfaces 650, and communication devices 658) to basic configuration 602 via bus/interface controller 630. Example output devices 642 include a graphics processing unit 644 and an audio processing unit 646, which may be configured to communicate to various external devices such as a display or speakers via one or more A/V ports 648.

Example peripheral interfaces 650 include a serial interface controller 652 or a parallel interface controller 654, which may be configured to communicate with external devices such as input devices (e.g., keyboard, mouse, pen, voice input device, touch input device, etc.) or other peripheral devices (e.g., printer, scanner, etc.) via one or more I/O ports 656. An example communication device 658 includes a network controller 660, which may be arranged to facilitate communications with one or more other business computing devices 662 over a network communication link via one or more communication ports 664.

The network communication link may be one example of a communication media. Communication media may typically be embodied by computer readable instructions, data structures, program modules, or other data in a modulated data signal, such as a carrier wave or other transport mechanism, and may include any information delivery media. A "modulated data signal" may be a signal that has one or more of its characteristics set or changed in such a manner as to encode information in the signal. By way of example, and not limitation, communication media may include wired media such as a wired network or direct-wired connection, and wireless media such as acoustic, radio frequency (RF), microwave, infrared (IR) and other wireless media. The term computer readable media as used herein may include both storage media and communication media.

Computing system 600 may be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. It may be noted that computing system 600 may also be implemented as a personal computer including both laptop computer and non-laptop computer configurations.

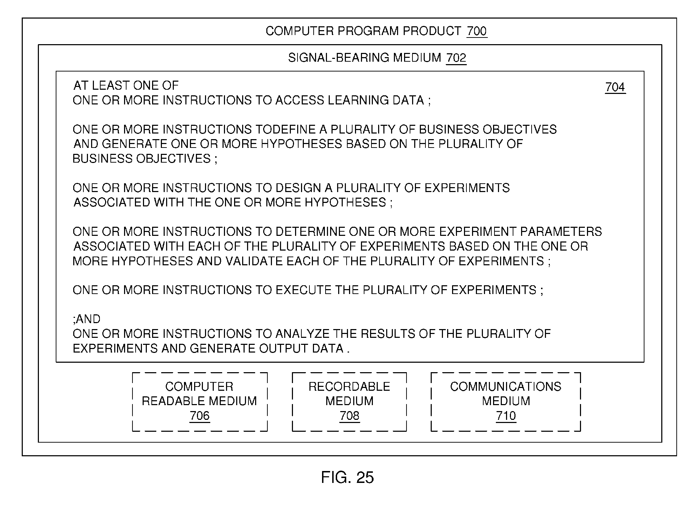

FIG. 25 illustrates an example computer program product 700 that can be utilized to implement creation and evaluation of experiments in computer systems, arranged in accordance with at least some embodiments described herein. Program product 700 may include a signal bearing medium 702. Signal bearing medium 702 may include one or more instructions 704 that, in response to execution by, for example, a processor, may provide the features described above with respect to FIGS. 1-24. Thus, for example, referring to system 600, processor 604 may undertake or cause to be undertaken the operations depicted in one or more of the blocks shown in FIG. 24 in response to instructions 704 conveyed to the system 700 by medium 702 and then executed.

In some implementations, signal bearing medium 702 may encompass a non-transitory computer-readable medium 706, such as, but not limited to, a hard disk drive, a Compact Disc (CD), a Digital Video Disk (DVD), a digital tape, memory, etc. In some implementations, signal bearing medium 702 may encompass a recordable medium 708, such as, but not limited to, memory, read/write (R/W) CDs, R/W DVDs, etc. In some implementations, signal bearing medium 702 may encompass a communications medium 710, such as, but not limited to, a digital and/or an analog communication medium (e.g., a fiber optic cable, a waveguide, a wired communications link, a wireless communication link, etc.). Thus, for example, program product 700 may be conveyed to one or more modules of the system 600 by an RF signal bearing medium 702, where the signal bearing medium 702 is conveyed by a wireless communications medium 710 (e.g., a wireless communications medium conforming with the IEEE 802.11 standard).

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present.

For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations).

While only certain features of several embodiments have been illustrated and described herein, many modifications and changes will occur to those skilled in the art. It is, therefore, to be understood that the appended claims are intended to cover all such modifications and changes as fall within the true spirit of the invention.

## Claims

1. A system for creating and evaluating experiments, the system comprising:
a learning repository configured to store learning data;
a definer module configured to define a plurality of business objectives and to generate one or more hypotheses based on the plurality of business objectives, wherein the definer module is further configured to design a plurality of experiments associated with the one or more hypotheses;
a design module configured to determine one or more experiment parameters associated with each of the plurality of experiments based on the one or more hypotheses and to validate each of the plurality of experiments;
an execution module configured to execute the plurality of experiments;
an analysis module configured to analyse the results of the plurality of experiments and to generate output data, and
a communication network coupled to the learning repository, the definer module, the design module, the execution module and the analysis module, wherein the communication network is configured to facilitate flow of information between the learning repository, the definer module, the design module, the execution module and the analysis module.

2. The system of claim 1, wherein the learning data comprises historical data associated with one or more executed experiments and/or wherein each of the definer module, the design module, the execution module and the analysis module utilizes learning data from the learning repository to: define the plurality of experiments, determine one or more experiment parameters associated with each of the plurality of experiments, execute the plurality of experiments and analyze the results of the plurality of experiments and/or wherein the plurality of business objectives are defined by a user based on the historical data associated with one or more executed experiments.

3. The system of claim 1 or 2, wherein the definer module is further configured to determine a learning schedule having a plurality of timeslots.

4. The system of claim 3 wherein the execution module is configured to execute the plurality of experiments in accordance with the learning schedule.

5. The system of any of the preceding claims, wherein the one or more experiment parameters associated with each of the plurality of experiments comprise a type of experiment, a number of factors associated with the experiments, sample size, cost of conducting the experiments, or combinations thereof and/or wherein the design module is further configured to estimate a metric to determine the success of experiments to validate the respective hypothesis.

6. The system of claim 5, wherein the type of experiment comprise a pre-selected experiment, a randomized experiment, a design factorial experiment, a fractional factorial experiment, a central composite experiment, a Plackett-Burman experiment or combinations thereof.

7. The system of any of the preceding claims, wherein the execution module is further configured to track the execution of the plurality of experiments and to modify one or more experiment parameters based on results of the plurality of experiments and/or wherein the execution module is further configured to perform quality check for the plurality of experiments.

8. The system of any of the preceding claims, wherein the analysis module further comprises an optimizer and a simulator to generate rollout scenarios for a user.

9. The system of claim any of the preceding claims, further comprising a display to communicate output data to a user of the system.

10. The system of claim 9, wherein the output data comprises one or more dashboards representing the results of the experiments, one or more business strategies based on the results of the experiments, or combinations thereof.

11. The system of any of the preceding claims, wherein each of the definer module, the design module, the execution module and the analysis module is configured to receive inputs from at least one of the other modules for creating and evaluating the experiments.

12. A computer-implemented method for creating and evaluating experiments, the method comprising:
accessing learning data in a learning repository;
defining, by a definer module, a plurality of business objectives and generating one or more hypotheses based on the plurality of business objectives;
designing, by the definer module, a plurality of experiments associated with the one or more hypotheses;
determining, by a design module, one or more experiment parameters associated with each of the plurality of experiments based on the one or more hypotheses;
executing, by an execution module, the plurality of experiments;and
analyzing, by an analysis module, results of the plurality of experiments and generating output data.

13. The computer-implemented method of claim 12, wherein at least one of defining the business objectives, designing the experiments, executing the experiments, analyzing the results of the experiments is performed using inputs from the learning data stored in the learning repository.

14. The computer-implemented method of claim 12 or 13, further comprising validating each of the plurality of experiments by the design module and/or storing historical data associated with one or more executed experiments as the learning data and/or determining one or more business strategies based on the results of the plurality of experiments.

15. A non-transitory computer readable medium having computer-executable instructions stored thereon that are executable by a processor to perform or cause to be performed the method of any one or more of claims 12-14.
